# EUROPÄISCHE PATENTSCHRIFT

(11) **EP 1 032 548 B1**
(45) Veröffentlichungstag und Bekanntmachung des Hinweises auf die Patenterteilung: **04.09.2002**
(21) Anmeldenummer: 98962345.9
(22) Anmeldetag: 16.11.1998
(51) Int. Cl.: C05D 9/00, C05D 3/02

(54) **PFLANZGRANULAT UND VERFAHREN ZU SEINER HERSTELLUNG**
PLANT GRANULATE AND METHOD FOR THE PRODUCTION THEREOF
GRANULES VEGETAUX ET PROCEDE PERMETTANT DE LES PREPARER

(30) Priorität: 17.11.1997 DE 19750951; 17.11.1997 DE 19750952
(43) Veröffentlichungstag der Anmeldung: 06.09.2000
(73) Patentinhaber: Harzmann-Optima Marketing- und Vertriebs GmbH, 72505 Krauchenwies-Göggingen (DE)
(72) Erfinder: HENNEBERG, Martin, D-88605 Me kirch (DE); HARTMANN, Rudolf, D-72505 Krauchenwies (DE); WILD, Kurt, D-78194 Immendingen (DE)
(74) Vertreter: Tomerius, Isabel, Dr.
(86) Internationale Anmeldenummer: EP9807320
(87) Internationale Veröffentlichungsnummer: WO99025665

(56) Entgegenhaltungen:
- EP-A- 0 259 608
- EP-A- 0 314 159
- EP-A- 0 476 550
- EP-A- 0 649 826
- EP-A- 0 747 526
- WO-A-92/12623
- WO-A-95/07384
- FR-A- 2 663 257
- US-A- 4 939 372

## Beschreibung

Die Erfindung betrifft ein Pflanzgranulat und insbesondere ein Pflanzgranulat, das als Anzucht- und Wachstumssubstrat für Pflanzen oder als Zusatz zu einem solchen Substrat verwendet werden kann, sowie ein Verfahren zu seiner Herstellung. Insbesondere betrifft die Erfindung ein Pflanzgranulat, das eine hohe Adsorptionsfähigkeit für Nährstoffe und/oder Wachstumsverbesserer besitzt und in der Lage ist, diese Nährstoffe und Wachstumsverbesserer über einen mehrere Jahre dauernden Zeitraum freizusetzen, so daß einerseits ein Auswaschen der Nährstoffe verhindert wird und andererseits eine Nachdüngung in diesem Zeitraum überflüssig ist. Das erfindungsgemäße Pflanzgranulat kann allein als Anzucht- und Wachstumssubstrat für Pflanzen verwendet werden oder als Zusatz zu solchen Substraten.

Anzucht- und Wachstumssubstrate für Pflanzen, die im folgenden als auch Erdsubstrate bezeichnet werden, finden z.B. bei der Begrünung von Dächern und anderen nicht erdgebundenen Flächen, in Pflanztrögen, bei speziellen Bepflanzungen sowie bei der qualitativen Verbesserung örtlich vorhandener Unter- und Oberböden Verwendung. Derartige Erdsubstrate werden aus verschiedenen Komponenten nach vorgegebenen Rezepturen industriell hergestellt. Die Rezepturen werden unter Berücksichtigung der Eigenschaften der Ausgangsmaterialien auf den jeweiligen Anwendungsfall und Pflanzenanspruch abgestimmt. Beispielsweise sind spezielle Substratmischungen für Intensiv- und Extensivbegrünungen, Baumpflanzungen, Tiefgaragenbegrünungen, Exotenpflanzungen, Unter- und Oberboden-Aufbereitung usw. bekannt. Für Dachbegrünungen sind die Auflagen für die Zusammensetzung der verschiedenen Substrate beispielsweise in den "Richtlinien für die Planung, Ausführung und Pflege von Dachbegrünungen", herausgegeben von der FLL Forschungsgesellschaft Landschaftsentwicklung und Landschaftsbau e.V., Bonn, Ausgabe 1995, beschrieben.

Die Anzucht- und Wachstumssubstrate bestehen in der Regel aus organischen und anorganischen Teilkomponenten, beispielsweise aus Lava, Bims, Kompost, Rindenhumus, Kalkgestein usw.
Zur Begünstigung des Pflanzenwachstums werden den Substraten schnell und/oder verzögert wirkende Nährstoffe in flüssiger oder fester Form beigegeben. Nährstoffe mit verzögerter Wirkung sind beispielsweise von Substanzen umhüllt, die sich im Substrat allmählich zersetzen und die Nährstoffe über einen längeren Zeitraum freigeben.

Wünschenswert ist es, mit den Langzeitdüngern eine möglichst lange Zeit abzudecken, in welcher eine Nachdüngung auch aus Kostengründen nicht erforderlich ist. Besonders in der Anwachsphase nach der ersten Bepflanzung des Wachstumssubstrates, einem Zeitraum von etwa zwei bis drei Jahren, ist eine kontinuierliche Nährstoffversorgung erwünscht, um das Anwachsen der Pflanzen zu verbessern. Aufgrund der notwendigen hohen Durchlässigkeit von Substratschichten und den beispielsweise bei Dachbegrünungen auftretenden hohen Oberflächentemperaturen ist die Wirksamkeit der gegenwärtig bekannten Langzeitdünger jedoch auf maximal acht bis zehn Monate, d.h. höchstens eine Vegetationsperiode, beschränkt.

Es ist bekannt, daß durch die Substratdurchlässigkeit und bei zeitlich begrenzten hohen Niederschlagsmengen, z.B. bei Gewittern, insbesondere bei geringen Substratschichtdicken schon in der ersten Wachstumsperiode oder kurz nach Folgedüngungen durch Auswaschen ein wachstumshemmender Nährstoffverlust im Substrat auftritt. Bei der bisher üblichen Verwendung von wasserlöslichen, konzentriert wirksamen Düngerformen ist der Nährstoffverlust durch Auswaschungen in besonderem Maß von der Wasserspeicherkapazität des Schichtaufbaus der Vegetationsflächen und von der Sickerwassermenge abhängig.

Der quantitative Nährstoffverlust ist nur schwer feststellbar, da er auch von wechselnden klimatischen Bedingungen beeinflußt wird. Nachteilige Auswirkungen der Nährstoffverluste auf das Pflanzenwachstum zeigen sich erst in der Folgezeit. Erfahrungsgemäß werden daher, z.B. durch Pflegeauftrag an einen Fachbetrieb, sechs bis acht Monate nach Aussaat/Anpflanzung die geschätzten Nährstoffdefizite durch Nachdüngung ausgeglichen, um eine bestandsbildende Flächendeckung der Vegetation zu erreichen. Eine solche Nachdüngung erfolgt auch bei extensiven Dachbegrünungen, bei denen davon ausgegangen werden kann, daß der Nährstoffbedarf nicht sehr hoch ist. Besonders hier muß jedoch erreicht werden, daß die Nährstoffe möglichst kontiniuerlich zur Verfügung stehen, da diese wegen der in den Richtlinien geforderten hohen Durchlässigkeit der Substrate sehr stark durch Niederschläge ausgewaschen werden.

Die nachträglichen Düngerzugaben, wie sie bei den heutigen Substratrezepturen erforderlich sind, sowie das zeitlich versetzte Nachdüngen nach der Bepflanzung der Vegetationsflächen oder der Aussaat bergen die Gefahr der Überdüngung in sich, die neben Pflanzenschäden vor allem zu Umweltbelastungen durch hohe Nährstoffauswaschungen führt. Die Nachdüngungen verursachen zudem zusätzliche Kosten, die oft übersehen und vernachlässigt werden.

Andererseits führt eine zu geringe Nährstoffbereitstellung im Anzucht- und Wachstumssubstrat und auch eine zu späte oder zu geringe Nachdüngung zu einem optisch sichtbaren Rückgang des Pflanzendeckungsgrades bzw. zu fehlendem Wachstum. Einmal festgestellte Wachstumsmängel lassen sich durch zusätzliche Nachdüngung nur zeitlich verzögert und in vielen Fällen nicht mehr gänzlich beheben, da sich auf den Freiflächen durch Anflug Unkräuter ansiedeln, die die Pflanzkulturen unterdrücken, wie z.B. nicht auf Nährstoffgaben angewiesene Leguminosenarten.

Die Problematik der richtigen Nährstoffbevorratung im Substrat ist äußerst komplex und wird von vielen Faktoren beeinflußt. Eine Rolle spielt beispielsweise die Aufnahmekapazität der Pflanzen, die wiederum vom Grad der Wurzelausbildung abhängt. Jungpflanzen mit noch mangelhafter Wurzelausbildung benötigen in der Regel in der ersten Wachstumsphase während der Wurzelbildung nur eine geringe Nährstoffmenge. Dies bedeutet, daß in dieser Phase bei herkömmlichen Substraten nur eine geringe Menge an Nährstoff von den Pflanzen aus dem Substrat aufgenommen wird, während ein großer Anteil ausgewaschen werden kann. Dieser ausgewaschene Anteil steht den Pflanzen in der Folgezeit nicht mehr zur Verfügung, so daß speziell bei Dachbegrünungen Mangelerscheinungen beobachtet werden.

In welchem Maße Nährstoffe aus einem Wachstumssubstrat ausgewaschen oder von den Pflanzen aufgenommen werden, hängt u.a. auch vom pH-Wert des Substrates ab. Der pH-Wert des Substrates richtet sich u.a. nach der gewünschten Bepflanzung. Im allgemeinen liegt der pH-Wert von Pflanzsubstraten im Bereich von 6 bis 8,5, in Ausnahmefällen bei Extensivbegrünung kann er auch bis auf 10,5 ansteigen. Häufig wird der pH-Wert auf einen leicht alkalischen Bereich eingestellt. Auf diese Weise soll auch den Einflüssen von saurem Regen entgegengewirkt werden. Bei trockenheitsverträglichen Pflanzengesellschaften liegt dieser pH-Bereich zwischen 7 und 7,5. PH-Werte unter 7, also im sauren Bereich, kommen in erster Linie bei Pflanzengesellschaften aus dem Moorbereich in Betracht. Derartige Pflanzengesellschaften finden bei Dachbegrünungen jedoch kaum Einsatz.

Die pH-Regulierung erfolgt derzeit durch Beimischung saurer und insbesondere alkalischer Verbindungen zum Substrat. Alkalische Verbindungen sind insbesondere carbonathaltige Substanzen in unterschiedlicher Form, z.B. als Travertinsplitt, Muschelkalk, Ziegelsplitt mit Mörtelresten usw.
Um das Versintern von Dachabläufen und Entwässerungseinrichtungen zu verhindern, ist durch die bereits genannten "Richtlinien für Dachbegrünungen" ein löslicher Carbonatgehalt von 25 g/l als oberer Grenzwert vorgeschrieben. Werden Gesteinsarten mit wenig wasserlöslichem Carbonatanteil in den Substraten verwendet, kann ein Anteil des carbonathaltigen Gesteins im Substrat von bis zu 20 Massen-% toleriert werden. In der Praxis werden üblicherweise Mischungen Calciumcarbonat-haltiger Substanzen eingesetzt, und die Zugabemenge dieser Substanzen zum Substrat wird in der Regel rein empirisch ermittelt, da die Wasserlöslichkeit von Calciumcarbonatanteilen sehr unterschiedlich ist. Die Unsicherheit der Mengenfestlegung von Zuschlagsstoffen zur pH-Wert-Regulierung findet auch ihren Niederschlag in den Grenzwertangaben der "Richtlinien für Dachbegrünungen" und den dort genannten Analysemethoden.

Ziel des pH-Wert-Regulierers ist dementsprechend eine definierte Steuerung des pH-Wertes zum Ausgleich des Säureeintrages durch Niederschläge.

Neben den Naturrohrstoffen zur Regulierung des pH-Wertes auf ein Niveau von pH 7 werden auch Ziegel-Recycling-Wertstoffe mit Mörtelresten eingesetzt. Die Schwierigkeiten bei der Mengenfestlegung des pH-Regulierers bleiben jedoch in diesem Fall ebenfalls bestehen.

Die Rezepturen der Erdsubstrate berücksichtigen die chemisch-physikalischen Eigenschaften der Hauptrohstoffe, soweit sie bekannt sind. Auf der Basis dieser Zusammensetzung erfolgt die Beigabe entsprechender Mengen bzw. Konzentrationen an Zuschlagsstoffen und Dünger. Zuschläge wie Blähton, Lava, Bims und Sand sind für die Anlagerung von Nährstoffen ungeeignet und beeinflussen den pH-Wert praktisch nicht (vgl. P.Fischer, "Düngung und Nährstoffauswaschung bei einschichtiger Dachbegrünung", in "Das Gartenamt" 2/95, S. 100 bis 104).

Weitere Zusatzstoffe sind organischer Art. Torf scheidet jedoch aus ökologischen Gründen bei der Substratherstellung aus. Anstelle von Torf können Komposte zum Einsatz kommen. Komposte besitzen pflanzenverfügbare Nährstoffe, deren Abgabe jedoch nicht quantifizierbar ist, da sie von den jeweils kompostierten Rohstoffen und deren Verrottungsgrad abhängt. Der Nährstoffgehalt von Komposten und deren Pflanzenverfügbarkeit kann daher in der Substratrezeptur nur bedingt Berücksichtigung finden.

Ein weiterer Nachteil von Komposten ist die mögliche Auswaschung von Salzen und/oder Schwermetallen. Bei Erdsubstraten ist ein Salzgehalt von maximal 1,0 g/l festgelegt. Außerdem soll das Substrat frei sein von Schwermetallen und Schwermetallverbindungen.

Alternativ zu Komposten kann Rindenhumus zur Substratherstellung verwendet werden. Bei diesem organischen Rohstoff kann ein Einfluß auf den Nährstoffhaushalt vernachlässigt werden, da der vorhandene Stickstoff durch den bakteriellen Abbau der organischen Substanzen fixiert ist. Hierbei hängt auch dieser Prozeß vom Verrottungsgrad des Rindenhumus zum Zeitpunkt der Verarbeitung ab.

Eine vorteilhafte Komponente im Hinblick auf den Nährstoffhaushalt im Substrat ist der Ton. Tone können im Zuge des Feuchtigkeitsaustausches Nährstoffe anlagern und pflanzenverfügbar halten. Ein Nachteil von Tonen ist jedoch der hohe Anteil an sehr kleinen Teilchen, wie beispielsweise Schluffkorn, das aus dem Substrat leicht ausgewaschen wird und damit die Funktion der Filterschicht in der Vegetationsflächen-Schichtstruktur durch Verschlämmen beeinträchtigt. Dies gilt insbesondere wegen der hohen Substratdurchlässigkeit. Bei Verschlämmung der Filterschicht kann sich im Schichtaufbau Staunässe bilden, die sich nachteilig auf den pH-Wert und die Bepflanzung in jeder Wachstumsphase auswirkt.

Um die beschriebenen Nachteile der Tonauswaschung und damit der Filterschichtverschlämmung zu begrenzen, sind durch die "Richtlinien für Dachbegrünungen" obere Grenzwerte für den Tongehalt in Substraten angegeben. Die Richtwerte sind maximal 20 Massen-% bei Intensivbegrünung, 15 Massen-% bei Extensivbegrünung mit dreischichtigem Aufbau und 5 Massen-% bei Extensivbegrünung mit einschichtigem Aufbau.

Mit dieser mengenmäßigen Einschränkung des Tonanteils im Substrat ist auch die Nutzung der vorteilhaften Eigenschaften in bezug auf Wasserrückhalt und Nährstoffanlagerung in gleicher Weise beschränkt. Im Falle von Substraten für die Extensivbegrünung mit einschichtigem Aufbau spielen die positiven Eigenschaften des Tones wegen des geringen Massenanteils von 5 % keine praktische Rolle mehr, obwohl sie hier besonders dringend erforderlich wären.

Die WO 92/12623 A1 beschreibt ein Pflanzgranulat, welches Ton und Mineralwolle enthält. Außerdem kann ein organisches Bindemittel vorhanden sein. Ein Mittel zur Regulierung des pH-Wertes ist in diesem Pflanzgranulat nicht enthalten.

Zusammenfassend kann also festgestellt werden, daß bislang Substrate für Dachbegrünungen, Pflanztröge, Ober- und Unterboden-Verbesserung usw., welche eine auf die jeweilige Vegetation abgestimmte, möglichst über mehrere Jahre anhaltende Regulierung des Nährstoffhaushaltes und des pH-Wertes ermöglichen, nicht zur Verfügung standen.

Ein weiterer Aspekt der Erfindung betrifft die Identifikation von Pflanzsubstraten. Dachbegrünungen haben eine Nutzungsdauer von einer Vielzahl von Jahren, und oft ist es nach Ablauf eines längeren Zeitraums nach der Aufbringung der Dachbegrünung nur schwer oder gar nicht möglich, festzustellen, welches Substrat für eine bestimmte Dachbegrünung verwendet wurde. Dies ist ein besonderes Problem im Hinblick auf die Frage der Herstellerhaftung bei eventuell auftretenden Schäden oder die spätere Wartung.

In der EP-A-669392 ist beschrieben, schüttfähige Stoffe durch Zusatz von sogenannten Kennzeichnungskörpern hinsichtlich ihrer Herkunft oder Qualität zu kennzeichnen. Beispiele von Kennzeichnungskörpern, die sich im Hinblick auf ihr Aussehen vom Schüttgut unterscheiden müssen, sind solche aus Pappe, Papier, Mais- oder Kartoffelstärke.

Auch Substrate für Dachbegrünungen können laut der EP-A-669 392 mit Kennzeichnungskörpern versetzt werden. Hier werden gebrochene eingefärbte Blähtonkörper in das Substrat eingemischt.
Die beschriebene Vorgehensweise hat jedoch einige Nachteile. Zum einen ist der Informationsgehalt, den die farbigen Blähtonkörper aufweisen, minimal. Durch Verwitterung der Blähtonkörper geht die Information (Farbe) zudem relativ schnell verloren. Außerdem ist eine Verfälschung sehr leicht möglich, beispielsweise, indem die farbigen Blähtonkörper ausgelesen werden oder andersfarbige Blähtonkörper zusätzlich in das Substrat gemischt oder auch fremden Substraten nachgeahmte Kennkörper zur Irreführung beigegeben werden.

Will man eine Verfälschung verhindern, müssen große Stückzahlen an farbigen Kennzeichnungskörpern zugegeben werden, was zum einen die Herstellung des Substrates verteuert und sich zum anderen auf die Qualität des Substrates negativ auswirken kann.

Grundsätzlich sind ohnehin relativ hohe Stückzahlen an Kennzeichnungskörpern notwendig, um sicherzustellen, daß die Kennzeichnungskörper ohne allzu großen Aufwand im Substrat wiedergefunden werden. Hier wirkt sich unter anderem nachteilig aus, daß die Kennzeichnungskörper lose im gesamten Substrat verteilt sind.

Weder im Hinblick auf ihren Informationsgehalt, die Beständigkeit und Fälschungssicherheit der Information noch die praktische Handhabung sind die in der EP-A-669 392 beschriebenen Kennzeichnungskörper daher zufriedenstellend.

**Aufgabe** der Erfindung ist es, ein Pflanzgranulat anzugeben, welches zur Speicherung und kontrollierten Freisetzung von Nährstoffen und Wachstumsverbesserern über einen möglichst langen Zeitraum, vorzugsweise über mehrere Jahre, in der Lage ist. Das Pflanzgranulat sollte während dieses Zeitraums auch die Fähigkeit besitzen, den pH-Wert im gewünschten Bereich zu regulieren. Das Pflanzgranulat sollte weiterhin aus umweltverträglichen Rohstoffen auf einfache und kostengünstige Weise herstellbar sein.

Weiterhin soll die Erfindung eine Möglichkeit schaffen, ein Anzucht- und Wachstumssubstrat für Pflanzen so zu kennzeichnen, daß eine Vielzahl produktrelevanter Informationen auf einfache Weise festellbar sind. Beispielsweise sollten Rückschlüsse auf den Hersteller, das Herstellungsdatum und die Art des Substrats möglich sein. Die Kennzeichnung sollte dabei fälschungssicher sein und keine negativen Einflüsse auf das Pflanzenwachstum ausüben.

Die Lösung dieser Aufgabe gelingt mit dem Pflanzgranulat gemäß Anspruch 1, hinsichtlich der Identifikation mit dem Pflanzgranulat gemäß Anspruch 17.

Die Erfindung betrifft weiterhin ein Verfahren zur Herstellung des erfindungsgemäßen Pflanzgranulates gemäß Anspruch 26, ein das erfindungsgemäße Pflanzgranulat enthaltendes Anzucht- und Wachstumssubstrat für Pflanzen gemäß Anspruch 24 sowie dessen Verwendung gemäß Anspruch 25. Bevorzugte und zweckmäßige Weiterbildungen sowie Verfahrensvarianten ergeben sich aus den jeweiligen Unteransprüchen.

Das erfindungsgemäße Pflanzgranulat umfaßt wenigstens ein tonmineralhaltiges Trägermaterial und wenigstens ein mineralisches Bindemittel. Im Unterschied beispielsweise zu Blähton ist das erfindungsgemäße Trägermaterial nicht gebrannt. Dadurch behält das Trägermaterial seine offenporige Struktur, so daß das erfindungsgemäße Pflanzgranulat zur Aufnahme und späteren Abgabe von Wasser, Nährstoffen und Wachstumsverbesserern ausgezeichnet geeignet ist. Der Anteil an Bindemittel stellt sicher, daß das Pflanzgranulat eine stabile Kornstruktur aufweist. Gleichzeitig wird durch Kombination von Trägermaterial mit mineralischem Bindemittel verhindert, daß Trägermaterial aus dem Granulat ausgewaschen wird. Die Verschlämmung von Filterschichten in Vegetationsflächen-Schichtaufbauten wird dadurch verhindert.

Das erfindungsgemäße Pflanzgranulat verwendet zudem nur mineralische oder organische, natürliche oder naturnahe, Materialien, so daß das Pflanzgranulat die Umwelt nur sehr wenig belastet. Dies gilt auch für die Zuschläge, Füllstoffe usw., die im erfindungsgemäßen Pflanzgranulat ebenfalls vorhanden sein können.

Das erfindungsgemäße Pflanzgranulat ist in der Lage, Wasser sowie die von den Pflanzen benötigten Nährstoffe und Wachstumsverbesserer in großer Menge zu speichern. Das erfindungsgemäße Pflanzgranulat kann beispielsweise dadurch mit Nährstoffen und Wachstumsverbesserern beschickt werden, daß es nach seiner Herstellung oder auch erst nach Aufbringung auf die zu bepflanzende Vegetationsfläche oder Einfüllen in den Pflanzbehälter mit einer konzentrierten, in der Regel wässrigen Nährsalz- oder Wachstumsverbessererlösung getränkt wird. Bei Kontakt mit Huminsäuren (Wurzel), Regenoder Gießwasser werden die Nährstoffe und Wachstumsverbesserer allmählich wieder aus dem Pflanzgranulat herausgelöst und an die Umgebung abgegeben. Durch die Adsorption an das Trägermaterial erfolgt diese Freisetzung jedoch sehr viel langsamer als in herkömmlichen Pflanzsubstraten. Die Düngewirkung hält über mehrere Jahre an und reicht üblicherweise für die gesamte Anwachsphase der Pflanzen aus.

Das erfindungsgemäße Pflanzgranulat bietet zudem den Vorteil, daß von außen in das Pflanzsubstrat zugeführte Nährstoffe und Wachstumsverbesserer, beispielsweise durch Verrottung von abgestorbenen Pflanzenteilen gebildete Nährstoffe oder Nährstoffe aus Nachdüngungen, vom Pflanzgranulat aufgenommen werden. Diese adsorbierten Nährstoffe werden später ebenfalls in die Umgebung abgegeben und können dann von den Pflanzen genutzt werden. Dies erhöht nicht nur die Nährstoffmenge, die den Pflanzen zur Verfügung steht, sondern vermindert auch die Belastung des Abwassers mit diesen Nährstoffen.

Besonders vorteilhafte Ergebnisse werden erzielt, wenn die Nährstoffe und/oder Wachstumsverbesserer nicht erst nachträglich, sondern bereits bei der Herstellung des erfindungsgemäßen Pflanzgranulats zugesetzt werden. Nährstoffe und Wachstumsverbesserer sind dann also in das Pflanzgranulat eingearbeitet. Auf diese Weise ist ein sehr hoher Beschickungsgrad des Pflanzgranulats mit Nährstoffen und Wachstumsverbesserern möglich, und die Düngewirkung hält besonders lange an.

Die Menge an Nährstoffen und Wachstumsverbesserern hängt in erster Linie von der beabsichtigten Verwendung des Pflanzgranulates ab. Die benötigten Mengen richten sich z.B. in bekannter Weise nach der Art der Bepflanzung und dem Nährstoffbedarf der jeweiligen Pflanzen, den klimatischen Verhältnissen, der Art des Vegetationssubstrates usw. Als Beispiel für die Menge der zugeführten Nährstoffe und Wachstumsverbesserer kann ein Anteil von 0,3 bis 10 und insbesondere von 0,5 bis 5 Gew.-%, bezogen auf das Gesamtgewicht des erfindungsgemäßen Pflanzgranulats, genannt werden.

Geeignet sind grundsätzlich alle für die jeweiligen Anwendungen bekannten Nährstoffe und Wachstumsverbesserer. Beispielhaft können Nährstoffe in Form einer wasserlöslichen Nährsalzmischung genannte werden, welche Stickstoff-, Phosphor-, Kalium- und/oder Magnesium-haltige Verbindungen umfaßt.

Wachstumsverbesserer können beispielsweise in Form von Ton-Humus-Komplexen vorhanden sein.

Die Auswahl des erfindungsgemäßen tonmineralhaltigen Trägermaterials ist ebenfalls nicht besonders beschränkt. Voraussetzung ist, daß das Trägermaterial offenporig und nicht gebrannt ist und so in der Lage ist, Wasser, Nährstoffe und/oder Wachstumsverbesserer reversibel zu adsorbieren. Geeignet sind beispielsweise alle tonmineralhaltigen Materialien, die bereits bisher - in nicht gebundener Form und mit den erwähnten Mengenbeschränkungen - in Vegetationsstubstraten Anwendung gefunden haben. Als Beispiele geeigneter Tonminerale können Smektite, Bentonit, Montmorillonit oder Kaolinit genannt werden. Die Tonminerale können synthetischer oder natürlicher Herkunft sein, wobei letztere aus Kostengründen bevorzugt werden. Zweckmäßig werden natürliche Tone verwendet, die zusammen mit ihren natürlichen organischen und/oder mineralischen Beimengungen (Sand, Schluff, Humus, Pflanzenreste usw.) eingesetzt werden können. Wegen des sehr geringen Preises kann das erfindungsgemäße Trägermaterial aus Schlämmen gewonnen werden, wie sie beispielsweise bei der Kies-, Sand-, Bimssteinoder Metallgewinnung als Rückstände anfallen. Weitere Beispiele für erfindungsgemäß geeignete Trägermaterialien sind solche, die aus Papierschlammasche sowie aus Rückständen der Papier- oder Bentonitherstellung gewonnen werden.

Auch die erfindungsgemäß verwendeten mineralischen Bindemittel sind nicht auf eine besondere Auswahl beschränkt. Ausreichend ist, daß das Bindemittel mit dem Trägermaterial und den gegebenenfalls vorhandenen weiteren Bestandteilen des erfindungsgemäßen Pflanzgranulates kompatibel ist und zu einem Pflanzgranulat hinreichender Festigkeit führt.

Eine hinreichende Festigkeit des Pflanzgranulats wird erreicht, wenn der Anteil des Bindemittels im gesamten Pflanzgranulat 2 bis 20 Gew.-%, insbesondere 5 bis 15 und vorzugsweise 7 bis 10 Gew.-% beträgt. Der erforderliche Anteil hängt insbesondere von den weiteren im Pflanzgranulat vorhandenen Komponenten ab. Weiterhin kann die Adsorptionsfähigkeit und Festigkeit des erfindungsgemässen Pflanzgranulats über den Anteil an Bindemittel gesteuert werden. Je größer der Anteil an Bindemittel und je geringer der Anteil an Trägermaterial, desto mehr verringert sich die Adsorptionsfähigkeit für Wasser, Nährstoffe und Wachstumsverbesserer. Im Hinblick auf das verwendete Trägermaterial sind bevorzugte Anteile, bezogen auf das Gesamtgewicht des Pflanzgranulats, 5 bis 98 Gew.-% und vorzugsweise 10 bis 80, insbesondere 20 bis 60 Gew.-%, an Trägermaterial im Pflanzgranulat. Der Anteil an Trägermaterial kann also im Falle der leicht ausschlämmbaren Tonmineralbestandteile deutlich höher sein, als in den "Richtlinien für Dachbegrünungen" angegeben, da ein Ausschlämmen durch Kombination mit dem Bindemittel verhindert wird.

Geeignete Zusammensetzungen können anhand der Beschreibung und der nachfolgend angegebenen Beispiele sowie gegebenenfalls durch einfache Versuche ohne weiteres ermittelt werden.

Beispiele für geeignete Bindemittel sind Zemente, ohne daß die Erfindung jedoch auf diese beschränkt wäre. Bevorzugt sind solche Zemente, die über einen gebundenen Kalkanteil verfügen. Geeignet ist beispielsweise Portland-Zement.

Neben den erwähnten Komponenten kann das erfindungsgemäße Pflanzgranulat weitere Bestandteile enthalten. Beispielhaft können mineralische und/oder organische Füllstoffe genannt werden. In den natürlichen Tonen, welche erfindungsgemäß als Trägermaterial verwendet werden können, sind derartige Komponenten bereits als Zuschläge enthalten. Mineralische und/oder organische Füllstoffe können dem erfindungsgemässen Pflanzgranulat aber auch gezielt zugesetzt werden, gegebenenfalls zusätzlich zu den bereits im Trägermaterial vorhandenen Zuschlägen.

Geeignete mineralische Füllstoffe sind solche, wie sie allgemein als mineralische Bestandteile in herkömmlichen Pflanzsubstraten und Vegetationsschichten für Dachbegrünungen, Unter- und Oberbodenaufbesserung usw. vorhanden sind. Beispielhaft können Blähton, Blähschiefer, Lava, Bims, Ziegelschutt oder ähnliche Baurückstände genannt werden. Bevorzugte Körnungen mineralischer Füllstoffe sind Tonschluff und/oder Sand. Vorzugsweise werden die mineralischen Füllstoffe wie z.B. Ziegelmehl, wenn es sich um recyclierte Materialien handelt, in fein vermahlener Form im erfindungsgemäßen Pflanzgranulat eingesetzt.

Als organische Füllstoffe können ebenfalls die üblicherweise in herkömmlichen Pflanz- und Wachstumssubstraten eingesetzten Materialien verwendet werden. Beispiel für organische Füllstoffe sind Kompost, Humus und Klärschlamm, die entweder allein oder in Kombination miteinander verwendet werden können. Im Falle von Kompost oder Klärschlamm ist darauf zu achten, daß die Belastung mit Schwermetallen oder sonstigen Schadstoffen möglichst gering ist, was im Falle von Rindenhumus in der Regel gewährleistet ist.

Die Menge an organischen Füllstoffen wird zweckmäßig so gewählt, daß die Vorgaben der "Richtlinien für Dachbegrünungen" erfüllt werden.

Dem erfindungsgemäßen Pflanzgranulat ist weiterhin wenigstens eine wasserlösliche alkalische Verbindung beigemengt, die zur Regulierung des pH-Wertes geeignet ist. Während der Zusatz einer sauren Verbindung in der Praxis eine geringe Rolle spielt, da eine Bepflanzung mit Pflanzen, die im sauren Bereich wachsen, nur selten gewählt wird, ist die Zugabe einer alkalischen Verbindung häufiger erforderlich. Beispielsweise muß im Bereich der Dachbegrünungen in vielen Fällen dauerhaft ein pH-Wert im Bereich von 7 bis 7,5 gesichert sein, um das Wachstum der gewählten Pflanzengesellschaft zu gewährleisten. Um den pH-Wert in diesem Bereich zu halten, hat sich Calciumcarbonat als Zusatz zu Pflanzsubstraten bewährt. Diese Verbindung ist als pH-Regulierer im erfindungsgemäßen Pflanzgranulat ebenfalls bevorzugt, jedoch können grundsätzlich auch andere Verbindungen zugesetzt werden, um den pH-Wert in den gewünschten Bereich zu bringen.

Die Verbindung kann in reiner Form oder in Form eines Gemisches zugegeben werden. Im Falle von Calciumcarbonat ist aus Kostengründen der Zusatz in Form von Calciumcarbonathaltigem Gesteinsmehl oder -splitt und insbesondere in Form von Kalkmehl bevorzugt. Beispiele geeigneter calciumcarbonathaltiger Gesteine sind im Stand der Technik grundsätzlich bekannt. Genannt werden können Travertin oder Muschelkalk.

Die erfindungsgemäße Einbindung des pH-Regulierers in das erfindungsgemäße Pflanzgranulat hat zum einen den Vorteil, daß der pH-Regulierer nicht aus der Vegetationsschicht ausgeschwemmt wird. Zum anderen erfolgt die Freisetzung des pH-Regulierers über einen langen Zeitraum sehr gleichmässig, so daß pH-Wert-Schwankungen in sehr viel geringerem Maße auftreten, als dies bisher beobachtet wurde, und praktisch keine Rolle mehr spielen.

Die Größe des erfindungsgemäßen Pflanzgranulates richtet sich nach der beabsichtigten Verwendung und liegt zweckmäßig in dem bisher im Stand der Technik üblichen Bereich. Bevorzugte Teilchendurchmesser sind 0,06 bis 20 mm, vorzugsweise 2 bis 10 mm und insbesondere 3 bis 5 mm.

Um die Oberfläche und damit die Adsorptionsfähigkeit des erfindungsgemäßen Pflanzgranulates zu vergrößern, besitzt das Pflanzgranulat bevorzugt eine poröse Struktur. Die poröse Struktur kann beispielsweise dadurch erhalten werden, daß bei der Herstellung des Pflanzgranulats ein Treibmittel o.ä. als Porenbildner zugefügt wird. Auch die auf dem Bausektor bei der Herstellung von Baumaterialien wie Porenoder Gasbeton verwendeteten Verfahren können bei der Herstellung des erfindungsgemäßen Pflanzgranulats eingesetzt werden.

Das erfindungsgemäße Pflanzgranulat weist gegenüber den bisher üblichen Granulaten einige wesentliche Vorteile auf. Beispielsweise wird das Ausschlämmen von Bestandteilen aus dem Granulat verhindert. Nährstoffe, pH-Wert-Regulierer und Wachstumsverbesserer werden kontinuierlich über einen sehr langen Zeitraum freigesetzt und den Pflanzen verfügbar gemacht, so daß über mehrere Jahre ein Nachdüngen der das erfindungsgemäße Pflanzgranulat umfassenden Pflanzungen nicht erforderlich ist. Durch die hohe Adsorptionsfähigkeit des erfindungsgemäßen Pflanzgranulats wird die Menge an Nährstoffen und Wachstumsverbesserern im Auswaschwasser drastisch vermindert, was einerseits zur Einsparung an diesen Materialien führt und andererseits die Umwelt entlastet.
Im Pflanzsubstrat beispielsweise durch Verrottung von abgestorbenen Pflanzenteilen gebildete Nährstoffe können für die Pflanzen sehr viel besser nutzbar gemacht werden.

In einem weiteren Aspekt betrifft die Erfindung das oben beschriebene Pflanzgranulat, in welches Informationsträger fest eingearbeitet sind, die mit einem lesbaren Code versehen sind. Vorzugsweise sind die Informationsträger so eingearbeitet, daß sie von außen nicht sichtbar sind.

Die feste Einbindung der Informationsträger in das Pflanzgranulat hat einige Vorteile. Einerseits kann die Anzahl an Informationsträgern gering gehalten werden, da innerhalb eines Anzucht- und Wachstumssubstrates für Pflanzen oder eines Schichtaufbaus für Dachbegrünungen oder ähnliches nur ein geringer Teil, nämlich das Pflanzgranulat, mit den Informationsträgern versehen wird. Die feste Verbindung von Informationsträgern und Pflanzgranulat verhindert, daß die Informationsträger aus dem Granulat ausgeschwemmt oder auf sonstige Weise aus dem Granulat ausgetragen werden. Außerdem ist es unmöglich, die Informationsträger aus dem Granulat zu entfernen oder die Informationen durch Zugabe anderer Kennzeichnungskörper zum Pflanzsubstrat zu verfälschen.

Dadurch, daß die Informationsträger die Information in Form eines Codes tragen, kann auch die Information der Informationsträger selbst praktisch nicht verändert werden.

Der Code ermöglicht zudem, eine Vielzahl von Informationen und grundsätzlich alle produktrelevanten Informationen zu speichern.

Der Code codiert dabei zweckmäßig wenigstens eine der folgenden Informationen: Hersteller, Herstellungsort, Herstellungsdatum, Produktkennummer, Produkttype oder jede sonst vom Hersteller gewünschte Information. Vorzugsweise enthält der Code mehrere der oben genannten Informationen.

Auch wenn die Informationsträger erfindungsgemäß mit dem Pflanzgranulat verbunden sind, ist es grundsätzlich möglich, einem Schichtaufbau erfindungsgemäßes Pflanzgranulat beizumischen, welches Informationsträger mit einem Code aufweist, der für den gesamten Schichtaufbau typisch ist. Der Code kann dann zweckmäßig alle Informationen enthalten, die zur Identifizierung und Kennzeichnung des spezifischen Schichtaufbaus notwendig sind. Will man beispielsweise einige Zeit nach Fertigstellung des Schichtaufbaus dessen produktrelevante Informationen feststellen, ist es ausreichend, einen Teil des Pflanzgranulats zu entnehmen und den Code der im Granulat enthaltenden Informationen zu analysieren.

Die Codierung kann auf übliche Weise erfolgen, beispielsweise wie dies aus dem Bereich der Etikettierung von Waren in Kaufhäusern oder Supermärkten bekannt ist. Als Code kann beispielsweise ein Dualcode gewählt werden. Es ist möglich, einen Farb-, Strich- oder Magnetcode zu verwenden. Ein magnetischer Code ist besonders zweckmäßig, da sich einerseits diejenigen Pflanzgranulat-Körper besonders leicht ausfindig machen lassen, welche codierte Informationsträger enthalten, und andererseits die Auswertung der Information ohne Isolierung der Informationsträger möglich ist. Der Farbcode besteht zweckmäßig aus einer für das jeweilige Produkt charakteristischen Abfolge verschiedener Farblagen. Es ist auch möglich, verschiedene Codierungsarten zu einem spezifischen Code miteinander zu kombinieren.

Der Code kann mit Hilfe eines geeigneten Lesegerätes auf an sich bekannte Weise gelesen und anschließend ausgewertet werden. Beispielhaft können optische und magnetische Lesegeräte genannt werden.

Bevorzugt sind die lesbaren Codes in Informationsträgern ausgebildet, die auf Basis eines polymeren Kunststoffes hergestellt wurden. Bevorzugte Kunststoffe sind solche, die gegen Feuchtigkeit und Witterung sehr beständig sind. Beispielhaft können Teilchen auf der Basis von Alkyd- oder Melaminharzen genannt werden.

Von Vorteil sind die Informationsträger sehr klein und weisen beispielsweise einen Durchmesser im Bereich von 0,02 bis 2 mm auf. Derartige sehr kleine Informationsträger auf Kunststoffbasis mit einem Farb- oder Magnetcode sind unter der Markenbezeichnung MICROTAGGANT R von der Simons Druck + Vertrieb GmbH, D-48301 Nottuln, käuflich erhältlich. Die sehr kleinen Informationsträger haben den Vorteil, daß sie im erfindungsgemäßen Pflanzgranulat mit bloßem Auge praktisch nicht mehr erkennbar sind, was die Fälschungssicherheit zusätzlich erhöht. Wegen ihrer geringen Größe beeinträchtigen sie auch nicht die Funktionsweise des Granulats.

Zweckmäßig werden die codierten Informationsträger dem erfindungsgemäßen Pflanzgranulat in einer Menge zugesetzt, die ausreicht, um die Informationsträger nach Aufbringung des Pflanzgranulats auf die zu begrünende Fläche ohne weiteres nachzuweisen. Durch die geringe Größe und die feste Einbindung in das Granulat ist es praktisch ausgeschlossen, die Informationsträger vollständig aus dem Granulat und aus Anzucht- oder Wachstumssubstraten, die das erfindungsgemäße Granulat enthalten, zu entfernen und so die im Code enthaltene Information zu vernichten. Eine Fälschung der Kennzeichnung des Substrats ist praktisch ausgeschlossen.

Umfaßt ein Erdsubstrat große Mengen an Pflanzgranulat, ist es aus Kostengründen bevorzugt, nur einen Teil des Pflanzgranulats mit Informationsträgern zu versehen.

Beispielsweise kann es vollkommen ausreichen, in nur etwa 5 bis 10 Vol.-% des gesamten Pflanzgranulats Informationsträger einzuarbeiten. Enthält der Informationsträger einen magnetischen Code, ist es in der Regel ohne weiteres möglich, die Informationsträger auch bei sehr dünner Verteilung im Substrat aufzufinden.

Geeignete Mengen liegen beispielsweise zwischen 0,1 und 25 Vol.-% an Informationsträger, bezogen auf das Volumen des Pflanzgranulats, in welches die Informationsträger eingearbeitet werden. Die hohen Volumenanteile werden vor allem dann eingesetzt, wenn das markierte Pflanzgranulat mit unmarkiertem gemischt werden soll.

Um das Auffinden des mit Informationsträgern versehenen Pflanzgranulats zu erleichtern, ist es möglich, dieses Granulat von dem nicht codierten Granulat optisch zu unterscheiden. Beispielsweise kann die Formgebung des codierten sich vom nicht codierten Pflanzgranulat unterscheiden. Während das eine also zum Beispiel aus im wesentlichen kugelförmigen Teilchen besteht, weist das andere etwa die Form von Scheiben oder gebrochenen Körpern auf oder besitzt sichtbar andere Inhaltsstoffe.

Besonders leicht auffindbar sind die Informationsträger, wenn sie magnetisch sind. Sie können dann - gegebenenfalls nach dem Zerkleinern des Pflanzgranulats, in das sie eingearbeitet sind - mit Hilfe eines Magneten aus dem Substrat herausgezogen und anschließend ausgewertet werden.

Das erfindungsgemäße Pflanzgranulat kann als solches ohne weitere Zusätze für die Bepflanzung verwendet werden. Pflanzgranulat mit geringen Zusätzen ist besonders für Einschichtaufbauten für Extensivbegrünungen mit geringem Nährstoffbedarf und geringen Anforderungen an die pH-Wert-Regulierung geeignet. Im Falle von Intensivbegrünungen wird das erfindungsgemäße Pflanzgranulat zweckmäßig als Zusatz zu herkömmlichen Substraten verwendet. Je nach Pflanzenart und -anspruch und in Abhängigkeit von der Nährstoffbefrachtung beträgt der Anteil an erfindungsgemäßem Pflanzgranulat im Erdsubstrat vorzugsweise 5 bis 20 Vol.-%.

Das erfindungsgemäße Pflanzgranulat kann grundsätzlich für jede Art von Bepflanzung verwendet werden. Bevorzugte Verwendungen sind diejenigen im Bereich von Dach- und Tiefgaragenbegrünung, Unter- und Oberbodenaufbereitung sowie die Verwendung als Substrat für Pflanztröge und Topferden sowie in Spezialanwendungen im Gartenbau und in der Aquaristik.

Das erfindungsgemäße Pflanzgranulat kann auf die folgende Weise hergestellt werden. Zunächst werden tonmineralhaltiges Trägermaterial und mineralisches Bindemittel in geeigneten Mengen unter Zusatz von Wasser gemischt. Geeignet hierfür ist jede Art von Rührwerk oder Mischer, der eine ausreichende Durchmischung der Materialien sicherstellt. Es wird so lange gemischt, bis eine dickflüssige Aufschlämmung erhalten worden ist. Diese Aufschlämmung wird dann entweder extrudiert und zerkleinert, so daß Pellets erhalten werden, oder die Aufschlämmung wird so lange gerührt, bis Pflanzgranulatkörper in der Mischvorrichtung erhalten werden. Die übrigen, im Vorstehenden aufgelisteten weiteren Komponenten des erfindungsgemäßen Pflanzgranulats (einschließlich der codierten Informationsträger) werden zu Beginn, während oder nach der Herstellung der Aufschlämmung, vorzugsweise in derselben Mischvorrichtung, eingemischt.

In vielen Fällen wird sich beim Mischen der genannten Komponenten die Temperatur in der Mischvorrichtung von allein erhöhen. Diese Temperaturerhöhung fördert das Abbinden der verwendeten Komponenten und die Bildung von Granulat-Körpern während des Rührvorgangs. Falls erforderlich, kann die Temperatur während des Mischvorgangs durch Zufuhr von Energie erhöht werden. Um das Abbinden und Trocknen der Pflanzgranulat-Pellets oder -Körper zu beschleunigen, kann die Temperatur ebenfalls durch Energiezufuhr gesteigert werden.

Wird eine bestimmte Teilchengröße des erfindungsgemäßen Pflanzgranulats gewünscht, können die erhaltenen Pflanzgranulat-Körper nach ihrer Herstellung klassiert werden, um Fraktionen definierter Teilchengröße zu erhalten. Sind die erhaltenen Teilchen größer als beabsichtigt, können Pellets oder Granulat-Körper nach dem Trocknen gebrochen werden.

Die Erfindung soll nachfolgend anhand zweier Beispiele näher erläutert werden. Soweit nicht anders erwähnt, beziehen sich die Prozentangaben auf Massen-%.

### Beispiel 1

In einer Mischtrommel werden 90 % Trägermaterial, bestehend aus Ton einer Körnung von 0,002 mm, in dem Schluff mit einer Teilchengröße von 0,02 bis 0,063 mm sowie Feinsand mit einer Sieblinie von 0,063 bis 0,2 mm enthalten sind, und 10 % Spezialzement mit gebundenem Kalkanteil (Portland-Zement PZ CEM/32,5) sowie ein der Mischung aus Ton und Zement gleicher Massenanteil Kalkmehl unter Zusatz einer wässrigen Nährsalzlösung, in der stickstoffhaltige Salze gelöst sind, zu einer dickflüssigen Aufschlämmung gemischt. Die Aufschlämmung wird so lange weiter gerührt, bis Pellets mit einer Sieblinie von 2 bis 10 mm entstehen.

Daraufhin wird die Mischtrommel entleert, und die Pellets werden bei Umgebungstemperatur getrocknet. Die Trocknungszeit beträgt je nach Trocknungstemperatur etwa drei bis sechs Tage.

Die fertigen, getrockneten Pellets des erfindungsgemäßen Pflanzgranulates nehmen etwa 30 % Wasser auf. Das aufgenommene Wasser reichert sich in den Pellets mit dem in das erfindungsgemäße Pflanzgranulat eingearbeiteten Nährstoffen an. Beim Rücktrocknen des Pflanzgranulates wird das an Nährstoffen angereicherte Wasser an die Umgebung abgegeben. Die Feuchtigkeitsaufnahme und -abgabe kann durch Zugabe eines Treibmittels als Porenbildner während der Herstellung des erfindungsgemäßen Pflanzgranulates weiter gesteigert werden.

Die erhaltenen Pellets enthalten einen definierten Anteil an Calciumcarbonat. Nach Vermischung des Pflanzgranulates mit herkömmlichem Erdsubstrat oder bei alleiniger Verwendung des Pflanzgranulates wird daher der pH-Wert auf einen Bereich von 7 bis 7,5 eingestellt.

### Beispiel 2

In einer Mischtrommel werden 85 % Trägermaterial, bestehend aus Ton einer Körnung von 0,002 mm, in dem Schluff mit einer Teilchengröße von 0,02 bis 0,063 mm sowie Feinsand mit einer Sieblinie von 0,063 bis 0,2 mm enthalten sind, 10 % Spezialzement mit gebundenem Kalkanteil (Portland-Zement PZ CEM/32,5), ein der Mischung aus Ton und Zement gleicher Massenanteil Kalkmehl und 5 % Informationsträger MICROTAGGANT R mit magnetischem Farbcode und einer Teilchengröße von 0,5 mm unter Zusatz einer wässrigen Nährsalzlösung, in der stickstoffhaltige Salze gelöst sind, zu einer dickflüssigen Aufschlämmung gemischt. Die Aufschlämmung wird so lange weiter gerührt, bis Pellets mit einer Sieblinie von 2 bis 10 mm entstehen. Daraufhin wird die Mischtrommel entleert, und die Pellets werden bei Umgebungstemperatur getrocknet. Die Trocknungszeit beträgt je nach Trocknungstemperatur etwa drei bis sechs Tage.

Nach Fertigstellung wird das Pflanzgranulat gebrochen, die magnetischen Informationsträger werden mit einem Magneten extrahiert und der Farbcode wird ausgewertet. Anhand des ermittelten Farbcodes konnte die im Code enthaltene Information über den Hersteller des Granulats, das Herstellungsdatum, die Zusammensetzung des Granulats, den Verwendungszweck - hier für den Einschichtaufbau einer Extensiv-Dachbegrünung - und die mit der Herstellung der Dachbegrünung beauftragte Firma festgestellt werden.

Die erhaltenen Pellets enthalten einen definierten Anteil an Calciumcarbonat. Nach Vermischung des Pflanzgranulates mit herkömmlichem Erdsubstrat oder bei alleiniger Verwendung des Pflanzgranulates wird daher der pH-Wert auf einen Bereich von 7 bis 7,5 eingestellt.

Das erfindungsgemäße Pflanzgranulats erlaubt es, auch lange Zeit nach Aufbringung eines Substrates, welches das erfindungsgemäße Pflanzgranulats umfaßt, auf eine zu begrünende Fläche wie ein Dach durch Ablesen und Auswerten des Codes in den Informationsträgern, die fest in das Granulat eingearbeitet sind, die produktrelevanten Informationen zu ermitteln. Beispielsweise ist feststellbar, wann und von welchem Hersteller das Substrat hergestellt wurde, was in Produkthaftungsfällen oder für die Wartung von großem Nutzen ist. Die Funktionsweise des Substrats wird dabei nicht beeinträchtigt. Eine Fälschung der Information ist praktisch ausgeschlossen.

## Patentansprüche

1. Pflanzgranulat, welches wenigstens ein tonmineralhaltiges Trägermaterial, welches offenporig, nicht gebrannt und zur reversiblen Adsorption von Wasser sowie Nährstoffen und/oder Wachstumsverbesserern befähigt ist, und ein Bindemittel enthält,
**dadurch gekennzeichnet,**
**daß** es 2 bis 20 Gew.-% Zement als Bindemittel und wenigstens eine wasserlösliche alkalische Verbindung zur Regulierung des pH-Wertes auf einen Bereich von 7 bis 7,5 umfasst.

2. Pflanzgranulat gemäß Anspruch 1,
**dadurch gekennzeichnet,**
**daß** es mineralische Füllstoffe umfaßt.

3. Pflanzgranulat gemäß einem der Ansprüche 2 oder 3,
**dadurch gekennzeichnet,**
**daß** es organische Füllstoffe umfaßt.

4. Pflanzgranulat gemäß einem der Ansprüche 1 bis 3,
**dadurch gekennzeichnet,**
**daß** es Nährstoffe und/oder Wachstumsverbesserer umfaßt.

5. Pflanzgranulat gemäß einem der Ansprüche 1 bis 4, **gekennzeichnet durch**
einen Teilchendurchmesser von 0,06 bis 20 mm, vorzugsweise 2 bis 10 mm und insbesondere 3 bis 5 mm.

6. Pflanzgranulat gemäß einem der Ansprüche 1 bis 5, **gekennzeichnet durch**
eine poröse Struktur.

7. Pflanzgranulat gemäß einem der Ansprüche 1 bis 6,
**dadurch gekennzeichnet,**
**daß** das Bindemittel in einem Anteil von 5 bis 15 und insbesondere 7 bis 10 Gew.-% vorhanden ist.

8. Pflanzgranulat gemäß einem der Ansprüche 1 bis 7,
**dadurch gekennzeichnet,**
**daß** das Trägermaterial aus Papierschlammasche, Rückständen bei der Papier- oder Bentonitherstellung oder Schlamm aus der Kies-, Sand-, Bimsstein- oder Metallgewinnung gewonnen ist.

9. Pflanzgranulat gemäß einem der Ansprüche 1 bis 8,
**dadurch gekennzeichnet,**
**daß** der Anteil des Trägermaterials 5 bis 98 Gew.-%, vorzugsweise 10 bis 80 und insbesondere 20 bis 60 Gew.-%, beträgt.

10. Pflanzgranulat gemäß einem der Ansprüche 2 bis 9,
**dadurch gekennzeichnet,**
**daß** Schluff und/oder Sand als mineralische Füllstoffe vorhanden sind.

11. Pflanzgranulat gemäß einem der Ansprüche 3 bis 10,
**dadurch gekennzeichnet,**
**daß** als organische Füllstoffe Kompost und/oder Humus und/oder Klärschlamm vorhanden sind.

12. Pflanzgranulat gemäß einem der Ansprüche 1 bis 11,
**dadurch gekennzeichnet,**
**daß** als pH-regulierende Verbindung Calciumcarbonat vorhanden ist.

13. Pflanzgranulat gemäß Anspruch 12,
**dadurch gekennzeichnet,**
**daß** das Calciumcarbonat in Form von CaCO₃-haltigem Gesteinsmehl oder -splitt und insbesondere in Form von Kalkmehl vorhanden ist.

14. Pflanzgranulat gemäß einem der Ansprüche 4 bis 13,
**dadurch gekennzeichnet,**
**daß** die Nährstoffe in Form einer Stickstoff-, Phosphor-, Kalium- und/oder Magnesium-haltigen, wasserlöslichen Nährsalzmischung vorhanden sind.

15. Pflanzgranulat gemäß einem der Ansprüche 4 bis 14,
**dadurch gekennzeichnet,**
**daß** die Wachstumsverbesserer in Form von Ton-Humus-Komplexen vorhanden sind.

16. Pflanzgranulat gemäß Anspruch 14 oder 15,
**dadurch gekennzeichnet,**
**daß** die Nährstoffe und/oder Wachstumsverbesserer in einem Anteil von 0,3 bis 10 und insbesondere 0,5 bis 5 Gew.-% vorhanden sind.

17. Pflanzgranulat gemäß einem der Ansprüche 1 bis 16,
**dadurch gekennzeichnet,**
**daß** in dieses mit einem lesbaren Code versehene Informationsträger fest eingearbeitet sind.

18. Pflanzgranulat gemäß Anspruch 17,
**dadurch gekennzeichnet,**
**daß** der Code wenigstens eine der folgenden Informationen codiert: Hersteller, Herstellungsort, Herstellungsdatum, Produktkennummer, Produktname.

19. Pflanzgranulat gemäß einem der Ansprüche 17 oder 18,
**dadurch gekennzeichnet,**
**daß** der Code in einem Dualcode besteht.

20. Pflanzgranulat gemäß einem der Ansprüche 17 bis 20,
**dadurch gekennzeichnet,**
**daß** der Code in einem Farbcode, einem Strichcode und/oder in einem Magnetcode besteht.

21. Pflanzgranulat gemäß einem der Ansprüche 17 bis 20,
**dadurch gekennzeichnet,**
**daß** es sich bei den Informationsträgern um Teilchen auf der Basis eines polymeren Kunststoffes handelt.

22. Pflanzgranulat gemäß einem der Ansprüche 17 bis 21,
**dadurch gekennzeichnet,**
**daß** die Informationsträger einen Durchmesser von 0,02 bis 2 mm aufweisen.

23. Pflanzgranulat gemäß einem der Ansprüche 17 bis 22,
**dadurch gekennzeichnet,**
**daß** die Informationsträger magnetisch sind.

24. Anzucht- und Wachstumssubstrat für Pflanzen,
**dadurch gekennzeichnet,**
**daß** es Pflanzgranulat gemäß einem der Ansprüche 1 bis 23 umfaßt.

25. Verwendung des Anzucht- und Wachstumssubstrates gemäß Anspruch 24
für die Dach- und Tiefgaragenbegrünung, Unter- und Oberboden-Aufbereitung und als Substrat für Pflanztröge sowie Topferden und Spezialanwendungen im Gartenbau und in der Aquaristik.

26. Verfahren zur Herstellung von Pflanzgranulat gemäß einem der Ansprüche 1 bis 23,
**dadurch gekennzeichnet,**
**daß** es die folgenden Schritte umfaßt:
Mischen von tonmineralhaltigem Trägermaterial, mineralischem Bindemittel und pH-regulierender alkalischer Verbindung unter Zusatz von Wasser, bis eine dickflüssige Aufschlämmung entsteht,
und entweder
Extrudieren der Aufschlämmung und Zerkleinern in Pellets oder
Rühren der Aufschlämmung, bis Pflanzgranulat-Körper erhalten werden.

27. Verfahren gemäß Anspruch 26,
**dadurch gekennzeichnet,**
**daß** zu Beginn, während oder nach der Herstellung der Aufschlämmung eine oder mehrere der folgenden Komponenten eingemischt werden:
mineralische Füllstoffe, organische Füllstoffe, Nährstoffe, Wachstumsverbesserer, mit lesbarem Code versehene Informationsträger.

28. Verfahren gemäß Anspruch 26 oder 27,
**dadurch gekennzeichnet,**
**daß** der Aufschlämmung ein Porenbildner beigemengt wird.

29. Verfahren gemäß einem der Ansprüche 26 bis 28,
**dadurch gekennzeichnet,**
**daß** die Aufschlämmung bei erhöhter Temperatur gerührt wird und/oder Pellets oder Granulatkörper bei erhöhter Temperatur getrocknet werden.

30. Verfahren gemäß einem der Ansprüche 26 bis 29,
**dadurch gekennzeichnet,**
**daß** die Pellets oder Granulatkörper nach dem Trocknen gebrochen werden.

## Claims

1. Plant granulate containing at least a supporting material and a binder, the supporting material containing clay mineral, being open-cell, not fired and capable of reversible adsorption of water as well as nutrients and/or growth promoters,
**characterized in that**
it comprises 2 to 20 percent by weight cement as a binder and at least one water-soluble, alkaline compound for regulating the pH-value to a range of 7 to 7.5.

2. Plant granulate according to claim 1,
**characterized in that** it comprises mineral fillers.

3. Plant granulate according to any one of claims 2 or 3,
**characterized in that** it comprises organic fillers.

4. Plant granulate according to any one of claims 1 to 3,
**characterized in that** it comprises nutrients and/or growth promoters.

5. Plant granulate according to any one of claims 1 to 4,
**characterized by** a particle diameter of 0.06 to 20 mm, preferably 2 to 10 mm, and in particular 3 to 5 mm.

6. Plant granulate according to any one of claims 1 to 5,
**characterized by** a porous structure.

7. Plant granulate according to any one of claims 1 to 6,
**characterized in that** the binder is present in a proportion of 5 to 15 and, in particular, 7 to 10 percent by weight.

8. Plant granulate according to any one of claims 1 to 7,
**characterized in that** the supporting material is obtained from paper sludge ash, residues from the production of paper or bentonite or from sludge from the exploitation of gravel, sand, pumice or metal.

9. Plant granulate according to any one of claims 1 to 8,
**characterized in that** the portion of supporting material is 5 to 98 percent by weight, preferably 10 to 80 and, in particular, 20 to 60 percent by weight.

10. Plant granulate according to any one of claims 2 to 9,
**characterized in that** silt and/or sand are present as mineral fillers.

11. Plant granulate according to any one of claims 3 to 10,
**characterized in that** compost and/or humus and/or sewage sludge are present as organic fillers.

12. Plant granulate according to any one of claims 1 to 11,
**characterized in that** calcium carbonate is present as pH-regulating compound.

13. Plant granulate according to claim 12,
**characterized in that** calcium carbonate is present in form of powdered stone powder or crushed stone containing CaCO₃ and in particular in form of lime powder.

14. Plant granulate according to any one of claims 4 to 13,
**characterized in that** the nutrients are present in form of a water-soluble mixture of nutrient salts containing nitrogen, phosphorus, potassium and/or magnesium.

15. Plant granulate according to any one of claims 4 to 14,
**characterized in that** the growth promoters are present in form of clay-humus-complexes.

16. Plant granulate according to any one of claims 14 or 15,
**characterized in that** the nutrients and/or growth promoters are present in a portion of 0.3 to 10 and in particular 0.5 to 5 percent by weight.

17. Plant granulate according to any one of claims 1 to 16,
**characterized in that** information carriers provided with a readable code are firmly incorporated.

18. Plant granulate according to claim 17,
**characterized in that** at least one of the following pieces of information is encoded by the code: producer, place of production, date of production, product identification number, product name.

19. Plant granulate according to any one of claims 17 or 18,
**characterized in that** the code consists of a binary code.

20. Plant granulate according to any one of claims 17 to 20,
**characterized in that** the code consists of a colour code, a bar code and/or a magnetic code.

21. Plant granulate according to any one of claims 17 to 21,
**characterized in that** the information carriers are particles on the basis of a polymeric synthetic material.

22. Plant granulate according to any one of claims 17 to 22,
**characterized in that** the information carriers have a diameter of 0.02 to 2 mm.

23. Plant granulate according to any one of claims 17 to 22,
**characterized in that** the information carriers are magnetic.

24. Sowing and growth substrate for plants,
**characterized in that** it comprises plant granulate according to any one of claims 1 to 23.

25. Use of the sowing and growth substrate according to claim 24 for greening of roofs and underground car parks, preparation of subsoil and topsoil and as a substrate for plant troughs as well as potting soils and special applications in horticulture and in connection with aquariums.

26. Process for production of plant granulate according to any one of claims 1 to 23,
**characterized in that**
it comprises the following steps:
mixing of a supporting material containing clay mineral with mineral binder and a pH-regulating alkaline compound, water being added until a viscous slurry is obtained, and either
extruding of the slurry and pelletization or
stirring of the slurry until plant granulate bodies are obtained.

27. Process according to claim 26,
**characterized in that** at the beginning, during or after production of the slurry one or more of the following components are mixed in:
mineral fillers, organic fillers, nutrients, growth promoters, information carriers provided with a readable code.

28. Process according to one of claims 26 or 27,
**characterized in that** an expanding agent is mixed in the slurry.

29. Process according to any one of claims 26 to 28,
**characterized in that** the slurry is stirred at raised temperature and/or pellets or granulate bodies are dried at raised temperature.

30. Process according to any one of claims 26 to 29,
**characterized in that** the pellets or granulate bodies are broken after drying.

## Revendications

1. Granulés pour plantes, qui contiennent au moins un matériau de substrat contenant un minéral argileux, qui est à pores ouverts, non calciné et capable d'une adsorption réversible d'eau et de nutriments et/ou d'améliorants de croissance, ainsi qu'un liant, ***caractérisés en ce qu*'**ils contiennent de 2 à 20 % en poids de ciment comme liant et au moins un composé alcalin soluble dans l'eau pour réguler le pH dans une plage de 7 à 7,5.

2. Granulés pour plantes selon la Revendication 1, ***caractérisés en ce qu***'ils contiennent des matières de charge minérales.

3. Granulés pour plantes selon l'une quelconque des Revendications 2 ou 3, ***caractérisés en ce qu***'ils contiennent des matières de charge organiques.

4. Granulés pour plantes selon l'une quelconque des Revendications 1 à 3, ***caractérisés en ce qu***'ils contiennent des nutriments et/ou des améliorants de croissance.

5. Granulés pour plantes selon l'une quelconque des Revendications 1 à 4, ***caractérisés par*** un diamètre de particules de 0,06 à 20 mm, de manière préférée de 2 à 10 mm et en particulier de 3 à 5 mm.

6. Granulés pour plantes selon l'une quelconque des Revendications 1 à 5, ***caractérisés par*** une structure poreuse.

7. Granulés pour plantes selon l'une quelconque des Revendications 1 à 6, ***caractérisés en ce que*** le liant est présent selon une proportion de 5 à 15 et en particulier de 7 à 10 % en poids.

8. Granulés pour plantes selon l'une quelconque des Revendications 1 à 7, ***caractérisés en ce que*** le matériau de substrat est extrait de cendre de boues de papier, de résidus de la fabrication du papier ou de la bentonite, ou de boues résultant de la fabrication de graviers, de sable, de ponce ou de métal.

9. Granulés pour plantes selon l'une quelconque des Revendications 1 à 8, ***caractérisés en ce que*** la proportion du matériau de substrat est de 5 à 98 % en poids, de préférence 10 à 80 % en poids et en particulier de 20 à 60 % en poids.

10. Granulés pour plantes selon l'une quelconque des Revendications 2 à 9, ***caractérisés en ce que*** de l'ardoise et/ou du sable est(sont) présent(s) comme matière de charge minérale.

11. Granulés pour plantes selon l'une quelconque des Revendications 3 à 10, ***caractérisés en ce que*** du compost et/ou de l'humus et/ou des boues d'épuration sont présents comme matières de charge organiques.

12. Granulés pour plantes selon l'une quelconque des Revendications 1 à 11, ***caractérisés en ce que*** du carbonate de calcium est présent comme composé régulateur de pH.

13. Granulés pour plantes selon la Revendication 12, ***caractérisés en ce que*** le carbonate de calcium est présent sous la forme de roche broyée ou de fragments de roche contenant CaCO₃ et en particulier sous la forme de chaux pulvérisée.

14. Granulés pour plantes selon l'une quelconque des Revendications 4 à 13, ***caractérisés* *en ce que*** les nutriments sont présents sous la forme d'un mélange de sels nutritifs soluble dans l'eau contenant de l'azote, du phosphore, du potassium et/ou du magnésium.

15. Granulés pour plantes selon l'une quelconque des Revendications 4 à 14, ***caractérisés en ce que*** les améliorants de croissance sont présents sous la forme de complexes argile-humus.

16. Granulés pour plantes selon la Revendication 14 ou 15, ***caractérisés en ce que*** les nutriments et/ou les améliorants de croissance sont présents dans une proportion de 0,3 à 10, et en particulier de 0,5 à 5 % en poids.

17. Granulés pour plantes selon l'une quelconque des Revendications 1 à 16, ***caractérisés en ce que*** des supports d'informations munis d'un code lisible leur sont intégrés.

18. Granulés pour plantes selon la Revendication 17, ***caractérisés en ce que*** le code décrit au moins l'une des informations suivantes : fabricant, lieu de fabrication, date de fabrication, numéro du produit, nom du produit.

19. Granulés pour plantes selon l'une quelconque des Revendications 17 ou 18, ***caractérisés en ce que*** le code est composé d'un code double.

20. Granulés pour plantes selon l'une quelconque des Revendications 17 à 20, ***caractérisés en ce que*** le code est composé d'un code couleur, d'un code à barres et/ou d'un code magnétique.

21. Granulés pour plantes selon l'une quelconque des Revendications 17 à 20, ***caractérisés en ce que*** les supports d'informations sont des particules à base d'une matière synthétique polymère.

22. Granulés pour plantes selon l'une quelconque des Revendications 17 à 21, ***caractérisés en ce que*** les supports d'informations présentent un diamètre de 0,02 à 2 mm.

23. Granulés pour plantes selon l'une quelconque des Revendications 17 à 22, ***caractérisés en ce que*** les supports d'informations sont magnétiques.

24. Substrat de culture et de croissance pour plantes, ***caractérisé en ce qu***'il contient des granulés pour plantes selon l'une quelconque des Revendications 1 à 23.

25. Utilisation du substrat de culture et de croissance selon la Revendication 24 pour la végétalisation d'une toiture ou d'un parking souterrain, l'aménagement de sols et de sous-sols et comme substrat pour des bacs à plantes ainsi que des terres de rempotage, et des applications spéciales en horticulture et dans l'aquariophilie.

26. Procédé de fabrication de granulés pour plantes selon l'une quelconque des Revendications 1 à 23, ***caractérisé en ce qu***'il comprend les étapes suivantes :
mélange d'un matériau substrat contenant de l'argile, de liants minéraux et de composés alcalins régulateurs de pH avec ajout d'eau, jusqu'à obtention d'une barbotine épaisse,
et soit extrudage de la barbotine et fragmentation en granulés,
soit agitation de la barbotine jusqu'à obtenir des corps de granulés pour plantes.

27. Procédé selon la Revendication 26, ***caractérisé en ce qu***'au début, pendant ou après la fabrication de la barbotine, un ou plusieurs des composants suivants sont ajoutés au mélange:
charges minérales, charges organiques, nutriments, améliorants de croissance, supports d'informations munis d'un code lisible.

28. Procédé selon la Revendication 26 ou 27, ***caractérisé en ce qu'***un formateur de pores est ajouté à la barbotine.

29. Procédé selon l'une quelconque des Revendications 26 à 28, ***caractérisé en ce que*** la barbotine est agitée à température augmentée et/ou des granules ou corps de granulés sont séchés à température augmentée.

30. Procédé selon l'une quelconque des Revendications 26 à 29, ***caractérisé en ce que*** les granules ou corps de granulés sont brisés après le séchage.
